**Europäisches Patentamt**

**European Patent Office**

**Office européen des brevets**

(19)

(11) Veröffentlichungsnummer : **0 006 604**
**B1**

(12)

# EUROPÄISCHE PATENTSCHRIFT

(45) Veröffentlichungstag der Patentschrift :
29.07.81

(51) Int. Cl.³ : **B 60 P  7/06, B 60 R  7/02**

(21) Anmeldenummer : 79102105.8

(22) Anmeldetag : 25.06.79

(54) **Vorrichtung zum Halten von Klein-Ladegut in einem Laderaum.**

(30) Priorität : 03.07.78 DE 2829176

(43) Veröffentlichungstag der Anmeldung :
09.01.80 (Patentblatt 80/01)

(45) Bekanntmachung des Hinweises auf die Patenterteilung : 29.07.81 Patentblatt 81/30

(84) Benannte Vertragsstaaten :
**AT BE CH FR GB IT NL SE**

(56) Entgegenhaltungen :
**DE - A - 2 538 394**
**DE - B - 2 443 882**
**DE - C - 949 089**
**GB - A - 847 792**
**US - A - 2 953 287**
**US - A - 3 027 017**
**US - A - 4 027 892**

(73) Patentinhaber : **Heidecker, Hanns**
**Ohlenkamp 28**
**D-2000 Hamburg 52 (DE)**

(72) Erfinder : **Heidecker, Hanns**
**Ohlenkamp 28**
**D-2000 Hamburg 52 (DE)**

(74) Vertreter : **Glawe, Richard, Dr. Ing. et al**
**Liebherrstrasse 20**
**D-8000 München 26 (DE)**

Imprimerie Jouve, 17, rue du Louvre, 75001 Paris, France

## Vorrichtung zum Halten von Klein-Ladegut in einem Laderaum

Die Erfindung betrifft eine Vorrichtung zum Halten von Kleinladegut in einem Laderaum, insbesondere im Kofferraum eines Personenkraftwagens, die aus einer auf dem Laderaumboden auslegbaren Bodenplatte mit einer Vielzahl oberseitig offener Ausnehmungen und mindestens einem Wandelement besteht, das in den Ausnehmungen befestigbar ist.

Unter dem beim Beschleunigen, Bremsen und Kurvenfahren auftretenden Beschleunigungen ändert kleines Ladegut im Kofferraum häufig in unerwünschter Weise seine Lage. Stoßempfindliches Ladegut kann dadurch beschädigt werden. Ladegut mit vorgeschriebener Transportstellung (beispielsweise offene Behälter wie Flaschen oder Einkaufsbeutel) kippen um und entleeren ihren Inhalt. Im Kofferraum vorgesehene Gurte zum Festzurren des Guts haben den Nachteil, daß sie infolge ihrer Flexibilität in vielen Fällen keine klare Lagesicherung ergeben, und umständlich zu handhaben sind.

Eine bekannte Vorrichtung der eingangs genannten Art (DE-PS 949 089) hat den Nachteil, daß nur wenige Positionierungsmöglichkeiten gegeben sind, weil jedes Wandelement nur zwei Einsteckzapfen aufweist. Die geringe Zahl der Befestigungspunkte erfordert außerdem eine sehr wuchtige Ausbildung der entsprechenden Steckvertiefungen in der Bodenplatte, so daß eine solche Ausführung nur dann infrage kommt, wenn diese Steckausnehmungen unmittelbar im Pritschenboden eines Fahrzeuges vorgesehen werden können. Sie verbietet sich aber für Bodenplatten, die in einem Laderaum oder Kofferraum erst nachträglich einzusetzen sind, weil solche Bodenplatten nur eine geringe Höhe haben dürfen, damit sie den zur Verfügung stehenden Raum nicht wesentlich verringern.

Bei einer weiteren Vorrichtung zum Halten von Klein-Ladegut in einem Laderaum ist auf eine entsprechende Bodenplatte verzichtet (DE-OS 20 18 094). Diese Vorrichtung besteht aus einer Mehrzahl kreuzweise im Kofferraum angeordneter Wandelemente, die an den Kreuzungspunkten Einschnitte zur Aufnahme des jeweils anderen, kreuzenden Wandelements aufweisen. Diese Einschnitte haben den Nachteil, daß sie die Stabilität der Wandelemente beeinträchtigen. Sie können daher auch nur in geringer Zahl in diesen vorgesehen sein, so daß nur eine begrenzte Zahl von Raumaufteilungsmöglichkeiten besteht. Die Wandelemente sind im Kofferraum auch nur dann hinreichend gegeneinander stabilisiert, wenn in jeder Richtung zumindest zwei parallele Wandelemente vorgesehen sind, die den Kofferraum somit in mindestens neun Abteilungen aufteilen. Jedoch ist eine so vielfältige Unterteilung des Kofferraums oft unerwünscht, wenn beispielsweise neben einem oder wenigen kleinen Gütern auch große Güter zu transportieren sind. Ferner hat der bekannte Kofferraumaufteiler den Nachteil, daß die Aufteilung nicht leicht änderbar ist, weil das Einstecken der Wandelemente in einer Mehrzahl von Wandkreuzungspunkten sehr umständlich ist. Schließlich hat die bekannte Vorrichtung den Nachteil, daß die Wandelemente nur dann sicher im Kofferraum gehalten sind, wenn ihre Länge genau den jeweiligen Kofferrauminnenmaßen entspricht. Die vom Ladegut auf die Wandelemente übertragenen Stützkräfte müssen nämlich von diesen auf die Seitenwände des Kofferraums übertragen werden. Die Wandelemente müssen daher für jeden Fahrzeugtyp eine individuelle Länge haben und können auch nicht innerhalb des Kofferraums variabel eingesetzt werden, weil sie nur jeweils an einer ganz bestimmten Stelle des Kofferraums eine Länge besitzen, die mit dem Abstand der Wände des Kofferraums übereinstimmt.

Der Erfindung liegt daher die Aufgabe zugrunde, eine Vorrichtung der eingangs genannten Art zu schaffen, die eine leicht zu variierende Aufteilung des Laderaums gestattet und auch für unterschiedliche Laderaumabmessungen verwendbar ist.

Die erfindungsgemäße Lösung besteht darin, daß der Rand des Wandelementes in die als Rinnen in einer seiner Dicke entsprechenden Weite ausgebildeten Ausnehmungen einsteckbar ist.

Die möglichen Positionen der Wandelemente sind lediglich durch die Anzahl und Lage der als Rinnen ausgebildeten Ausnehmungen in der Bodenplatte begrenzt, die in großer Zahl und in unterschiedlichen Richtungen vorgesehen werden können. Mann kann daher nahezu an jeder Stelle und in jeder beliebigen Richtung ein Ladegut beliebiger Größe ohne Beeinträchtigung des verbleibenden Teils des Laderaums festlegen. Die Bodenplatte kann fabrikationsmäßig in den Kofferraum eingearbeitet sein oder nachträglich eingelegt werden. Die Wandelemente werden im allgemeinen von Fall zu Fall eingesteckt. Wenn größeres Gut geladen werden soll, können sie entfernt werden, ohne daß die Bodenplatte entfernt werden muß.

Bei einer anderen Vorrichtung mit einer Bodenplatte zum Sichern von Gegenständen in einem Laderaum (DE-AS 24 43 882), ist diese mit einer Vielzahl hochstehender Noppen versehen, die knopfartig in die Grundplatten von Arretiereinrichtungen eingreifen, die mit den festzulegenden Gegenständen zusammenwirken. Die Abmessungen der Grundplatte liegen in derselben Größenordnung wie die Höhe der Arretiereinrichtungen. Letztere können daher keine wandbildende Funktion im Hinblick auf kleine Ladestücke übernehmen. Vielmehr werden sie im allgemeinen genau passend zu einem bestimmten Ladegut, beispielsweise einer Kiste, so gesetzt, daß sie mit den Ecken desselben zusammenwirken. Dabei hat die Verbindung der Arretiereinrichtungen mit den zugehörigen Grundplatten den Nachteil, daß sie auf der Grundplatte befestigt werden müssen, bevor das Ladegut eingelegt wird, weil letzteres die Grundplatten übergreift. Dies ist erforderlich, damit das Gewicht des Ladeguts die Grundplatte auf der Bodenplatte festhält, wenn auf das mit der Grundplatte verbundene, hochragende Arretierelement seitliche Stützkräfte wirken. Im Gegensatz dazu können die Wandelemente im Falle der Erfindung beliebig auch nach dem Laden eines Gegenstands gesetzt werden. Dies ist ein großer Vorteil, weil man andernfalls die Dimensionen des zu ladenden Stückes zuvor genau ausmessen müßte, um die richtige Stellung der Arretierelemente herauszufinden, und weil es oftschwierig ist, ein schweres Ladestück an eine ganz genau bestimmte Stelle des Laderaums, die von den Arretierelementen definiert ist, zu plazieren.

Die Erfindung gestattet es, das Gut ohne Rücksicht auf dessen genaue Größe in den Laderaum zu packen und anschließend an den für die Abstützung für wesentlich gehaltenen Stellen Wandelemente einzusetzen. Dabei besteht keine Gefahr, daß durch die von den Wandelementen aufzunehmenden Stützkräfte diese ihren Verbund mit der Bodenplatte verlieren könnten.

Im allgemeinen wird man die durchgehend begrenzten Ränder der Wandelemente in entsprechend rinnenförmig ausgebildete Ausnehmungen der Bodenplatte einsetzen. Die Erfindung schließt jedoch eine nicht geradlinig begrenzte, aus einer Mehrzahl von Vorsprüngen bestehende Wandausbildung der Wandelemente nicht aus.

In vielen Fällen werden die Ausnehmungen in der Bodenplatte für die Stabilisierung der Wandelemente ausreichen. In manchen Fällen ist es aber wünschenswert, daß sich die Wandelemente gegenseitig abstützen und versteifen. Sie sind deshalb zweckmäßigerweise längs ihrer senkrechten Ränder miteinander verbindbar. Dies geschieht vorzugsweise durch besondere Steckelemente, die im Zusammenwirken mit den senkrechten Rändern der zu verbindenden Wandelemente in den Zwischenraum zwischen den Wandelementen eingesteckt werden, wobei die kurze Steckstrecke, insbesondere am oberen Rand der Wandelemente ausreicht. Diese Steckelemente können so ausgebildet sein, daß sie nicht nur zwei Wandelemente sondern deren mehrere miteinander verbinden können.

Die Wandelemente können beliebige Gestalt annehmen. Sie können beispielsweise von Rahmen, Gittern oder dergleichen gebildet sein. Am zweckmäßigsten ist jedoch eine Flächenausbildung ohne oder mit nur wenigen oder kleinen Durchbrechungen.

Vorteilhaft sind die Wandelemente mit Einrichungen zum Verriegeln an der Bodenplatte versehen, damit sie nicht durch zufällige Krafteinwirkungen ungewollt nach oben herausgezogen werden können. Dafür sind die Ausnehmungen der Bodenplatte zweckmäßigerweise mit einer Hinterschneidung ausgerüstet, während am Wandelement ein Riegel vorgesehen ist, der durch entsprechende Schwenkung in Eingriff mit der Hinterschneidung gebracht werden kann. In der Verriegelungsstellung ist er zweckmäßigerweise formschlüssig sicherbar. In manchen Fällen mag auch eine Sicherung durch Federkraft genügen.

Die zum nachträglichen Einsetzen in den Laderaum bestimmte Bodenplatte wird vorteilhafterweise aus einer Vielzahl kleinerer Elemente zusammengesetzt, damit für jede Koffer oder Laderaumform die günstigste Gestalt der Bodenplatte zusammengesetzt werden kann. Die einzelnen Bodenelemente werden zweckmäßigerweise formschlüssig verrastbar ausgebildet, was in der Weise ausgeführt sein kann, daß die Ränder der Bodenelemente hinterschnittene Ausnehmungen aufweisen, die einander paarweise an benachbarten Bodenelementen gegenüberstehen und mittels geeigneter Bodenelemente, die jeweils in ein solches Ausnehmungspaar eingreifen, verbindbar sind.

Damit die Bodenplatte nicht als Ganzes im Kofferraum hin- und herrutscht, ist sie auf der Unterseite mit einer rutschfesten Auflage, z.B. aus Rohkautschuk, versehen. Für die Fälle, in denen dies nicht ausreicht, sind zweckmäßigerweise Einrichtungen zur seitlichen Abstützung an Wänden des Kofferraums vorgesehen, die zur Anpassung an die jeweiligen Maße verstellbar sein sollten.

Ein Ausführungsbeispiel der Erfindung wird im folgenden näher unter Bezugnahme auf die Zeichnung erläutert. Darin zeigen :

Fig. 1 eine perspektivische Gesamtansicht,

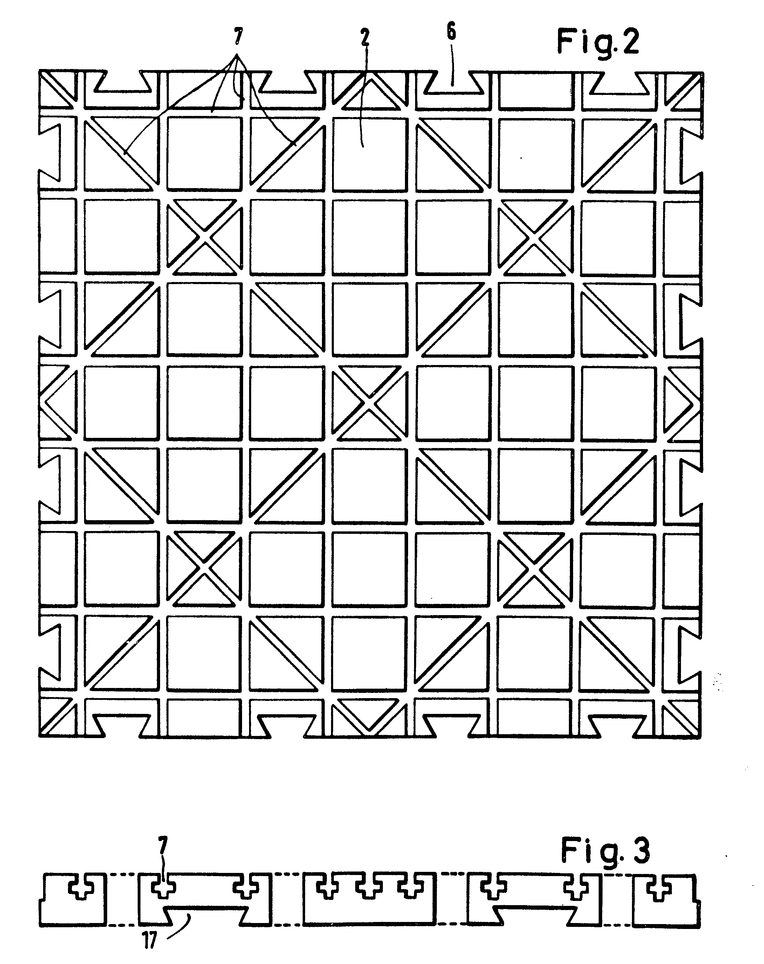

Fig. 2 u. 3 eine Draufsicht und eine Seitenansicht eines Bodenelements,

Fig. 4 einen vertikalen Querschnitt durch ein Wandelement mit Verriegelungseinrichtung und

Fig. 5 einen vertikalen Querschnitt durch ein Wandelement mit einer Stütze.

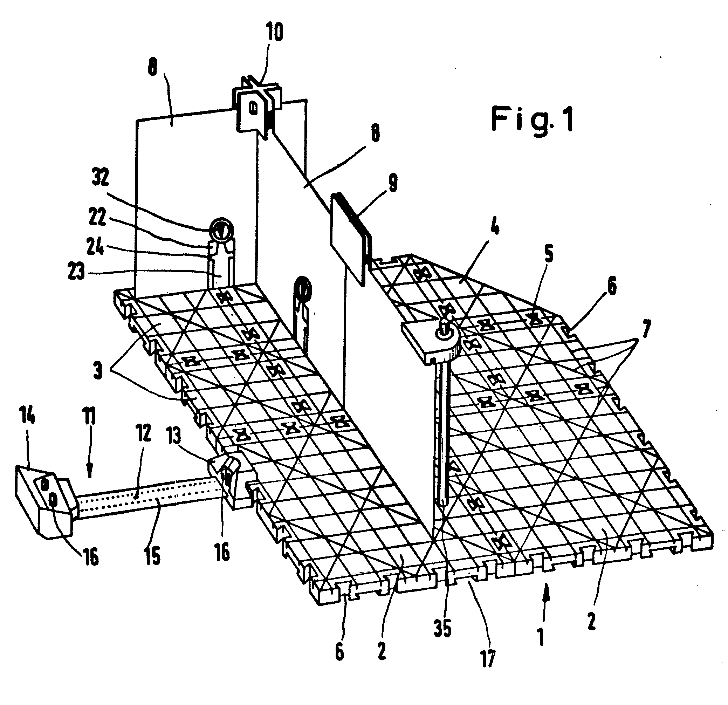

Die Bodenplatte 1 kann fest im Laderaum bzw. Kofferraum eingebaut sein. Für die nachträgliche Ausrüstung setzt sie sich zweckmäßigerweise in der in Fig. 1 gezeigten Art aus mehreren Elementen zusammen, nämlich aus größeren, quadratischen Elementen 2, kleinen quadratischen Elementen 3 und einem dreieckigen Element 4. Diese Elemente sind miteinander verbunden mittels Verbindungselementen 5, die in schwalbenschwanzförmig hinterschnittene Ausnehmungen 6 der Elementränder fassen. Sie sind darin unter Vorspannung verklemmt, damit sie sich nicht ungewollt lösen können.

Die Oberseiten der Elemente sind von Stecknuten 7 durchzogen, die teils längs bzw. quer und teils diagonal verlaufen. Sie haben einen solchen Abstand voneinander, daß sie nahezu jede beliebige Wandstellung ermöglichen.

Die Wandelemente 8 sind mit ihren unteren Rändern in die Nuten eingesteckt und dadurch gehalten. An ihrem oberen Rand Können sie, soweit sie nur in einer Ebene liegen, mittels Steckelementen 9 miteinander verbunden werden. Ein Steckelement 10 mit kreuzförmiger Grundform gestattet auch winkelige Befestigung. Die oberen Ränder können mit Vorsprüngen und Ausnehmungen versehen sein, die entsprechenden Vorsprüngen und Ausnehmungen innerhalb der Steckelemente entsprechen und die derart zusammenwirken, daß eine Relativverschiebung in Richtung der Wandebene nicht stattfinden kann.

In vielen Fällen wird es genügen, wenn die Steckelemente 9, 10, nur an einer Seite, nämlich an der unten anzuordnenden Seite, mit Stecknuten versehen sind. Im dargestellten Beispiel besitzen sie jedoch auch auf der Oberseite Stecknuten und geben dadurch die Möglichkeit, oberhalb der gezeigten Wände eine zweite Reihe von Wänden vorzusehen, die in die genannten oberen Nuten eingesteckt werden.

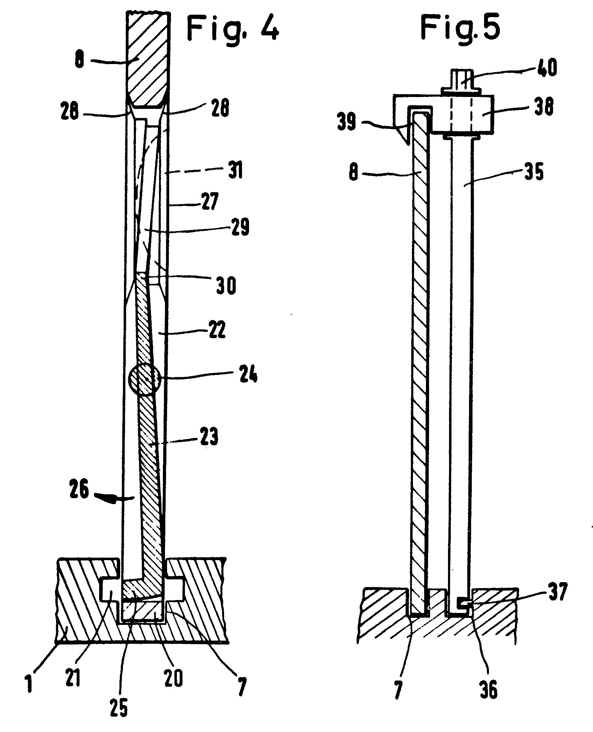

Die Stecknuten 7 sind im Querschnitt hinterschnitten ausgeführt, wie dies in Fig. 4 gezeigt ist. Man erkennt darin den eingesteckten unteren Rand 20 eines Wandelementes 8. Die Nut 7 ist unterhalb der seitlichen Hinterschneidung 21 so tief ausgeführt, daß der Fuß 20 hinreichend Kippsicher darin gehalten ist. Das Wandelement 8 besitzt einen Ausschnitt 22 (siehe auch Fig. 1), in welchem ein Riegelelement 23 um horizontale Schwenkachsen 24 gegenüber der Wandebene schwenkbar gelagert ist. Sein Fuß besitzt einen Riegelvorsprung 25, der sich in der Höhe der Nuthinterschneidung 21 befindet. Wenn das Riegelelement 23 in Pfeilrichtung 26 aus der dargestellten Lage herausgeschwenkt wird, dringt der Riegelvorsprung 25 in die Hinterschneidung 21 ein, um das Wandelement 8 in der Nut 7 festzuhalten.

Diese Schwenkbewegung wird dadurch bewerkstelligt, daß in dem Wandausschnitt 22 oberhalb des Riegelelements 23 eine Scheibe 27 drehbar gehalten ist. Die Scheibe 27 hat kreisförmigen Umriß, entsprechend kreisförmigen Umriß hat in diesem Bereich auch der Ausschnitt 22, in welchem sich die Scheibe 27 mittels ihrer Kragen 28 hält. Die Scheibe hat am Umfang eine schraubenförmige Nut 29, in die das obere Ende 30 des Riegelelements 23 eingreift. Bei 31 ist in eine Flachseite der Scheibe 27 eine Griffvertiefung mit Mittelsteg 32 eingearbeitet, mit dessen Hilfe die Scheibe 27 um ihre Mittelachse gedreht werden kann. Bei dieser Drehung wird das obere Ende 30 des Riegelelements 23 entsprechend dem Verlauf der Nut 29 quer zur Wandebene verschoben. Auf diese Weise kann der Riegelvorsprung 25 in die Hinterschneidung 21 der Nut 7 verschoben und darin gehalten werden.

Fig. 1 zeigt noch eine andere Möglichkeit zur Sicherung der Wandelemente in der vorgesehenen Lage, die im allgemeinen nicht mit den soeben erläuterten Verriegelungseinrichtungen kombiniert wird und nur der einfacheren Darstellungsweise mit ihnen zusammen in einer Figur erscheint. Es handelt sich um die Stütze 35, die in Fig. 5 in etwas größerem Maßstab veranschaulicht ist. Eine Vielzahl von Bohrungen 36 mit einer in die Bohrung von einer Seite hineinragenden Nase 37 ist über die Gesamtfläche der Bodenplatte in geeigneter Weise verteilt.

Die Stützen 35 werden von Stangen gebildet, die an ihrem unteren Ende mit Ausnehmungen versehen sind für ein bajonett verschlußartiges Zusammenwirken mit der Nase 37 und am oberen Ende besitzen sie einen Durchgriff 40. Sie sind mit ihrem oberen Ende in einem Spannstück 38 axial unverschiebbar gelagert, das einen unteren Ausschnitt 39 zur Aufnahme des oberen Randes eines Wandelementes 8 besitzt. Nach dem Einstecken der Wandelemente 8 in die Nuten 7, die in diesem Fall selbstverständlich nicht hinterschnitten ausgeführt zu sein brauchen, werden die Klauen 38 angesetzt und die Füße der Stangen 35 in die zugehörigen Löcher 36 eingesteckt, um mit dem am Stangenkopf vorgesehenen Drehgriff in die verriegelte Stellung gedreht zu werden. Die Wandelemente 8 sind dann nicht nur gegen Herausheben gesichert, sondern auch gegen seitliche Kippkräfte ausgesteift.

Bei 11 ist eine Einrichtung zur seitlichen Abstützung der Grundplatte gezeigt, die für nachträglich in einen Kofferraum einzubauende Anordnungen Verwendung findet. An anderen Seiten der Grundplatte können weitere derartige Abstützeinrichtungen vorgesehen sein. Hauptelement der Abstützeinrichtungen ist eine knicksteife Leiste 12, auf der ein Reiter 13 in Längsrichtung verschiebbar und in einer Vielzahl von Stellungen verrastbar ist, der hakenartig über den Rand der Grundplatte 1 greift und sie dadurch sowohl gegen seitliche Verschiebung als auch ggf. gegen Abheben von der Leiste 12 schützt. Am freien Ende der Leiste 12 ist ein Kopf 14 vorgesehen, der ebenfalls hakenartig ausgeführt ist, so daß er anstelle des Reiters 13 die Grundplatte halten kann, wenn eine sehr nahe Lage des Randes der Grundplatte am Ende der Leiste 12 gewünscht wird. Der Kopf ist zweckmäßigerweise abnehmbar, damit man zusätzliche Plattenelemente nachträglich auf die Leiste aufschieben kann.

Zum Verrasten des Reiters 13 ist die Leiste 12 mit einer Vielzahl von Ausnehmungen vorgesehen, die bei 15 auf der Leiste angeordnet sind und aus Bohrungen bestehen, in welche mindestens ein am Reiter 13 bzw. am Kopf 14 vorgesehener Stift 16 eingreifen kann. Selbstverständlich kann die Rasteinrichtung auch in beliebiger anderer Weise ausgebildet sein.

Unterhalb der Grundplatte 1 befinden sich Nuten zur Aufnahme der Leisten 12 der seitlichen Abstützeinrichtungen. Der Austrittsquerschnitt dieser Nuten ist beispielsweise bei 17 erkennbar. Diese Nuten geben den Leisten 12 einen seitlichen und durch schwalbenschwanzförmige Hinterschneidung auch einen vertikalen Halt.

**Ansprüche**

1. Vorrichtung zum Halten von Kleinladegut in einem Laderaum, insbesondere im Kofferraum eines Personenkraftwagens, die aus einer auf dem Laderaumboden auslegbaren Bodenplatte mit einer Vielzahl oberseitig offener Ausnehmungen und mindestens einem Wandelement besteht, das in den Ausnehmungen befestigbar ist, dadurch gekennzeichnet, daß der Rand des Wandelements (8) in die als Rinnen mit einer seiner Dicke entsprechenden Weite ausgebildeten Ausnehmungen (7) einsteckbar ist.

2. Vorrichtung nach Anspruch 1, dadurch gekennzeichnet, daß über den oberen Rand der Wandelemente fassende Steckelemente (9, 10) zur Verbindung benachbarter Wandelemente vorgesehen sind.

3. Vorrichtung nach einem der Ansprüche 1 bis 2, dadurch gekennzeichnet, daß die Bodenplatte aus einer Vielzahl kleinerer Bodenelemente formschlüssig zusammensetzbar ist.

4. Vorrichtung nach einem der Ansprüche 1 bis 3, dadurch gekennzeichnet, daß längsverstellbare Einrichtungen (12, 13, 14) zur seitlichen Abstützung der Bodenplatte (1) an Wänden des Laderaums vorgesehen sind.

5. Vorrichtung nach einem der Ansprüche 1 bis 4, dadurch gekennzeichnet, daß die Wandelemente (8) mit Einrichtungen (21-31) zum Verriegeln an der Bodenplatte (1) versehen sind.

6. Vorrichtung nach Anspruch 5, dadurch gekennzeichnet, daß die Ausnehmungen (7) der Bodenplatte (1) eine Hinterschneidung (21) aufweisen, und daß mit einem Wandelement (8) ein in der Hinterschneidung (21) verrastbarer Schwenkriegel (23, 25) verbunden ist.

7. Vorrichtung nach einem der Ansprüche 1 bis 6, dadurch gekennzeichnet, daß die Bodenplatte an der Unterseite mit einer rutschfesten Auflage versehen ist.

## Claims

1. A device for holding small-sized material to be loaded in a loading compartment, more especially in the luggage compartment of a passenger car, which device consists of a base plate which can be placed on the loading compartment bottom and has a plurality of recesses (holes ?), which are open at the top, and at least one wall element which can be fastened in the recesses, characterised in that the edge of the wall element (8) can be inserted into the recesses (7) which are formed as troughs having a width that corresponds to the thickness of the wall element.

2. A device as claimed in claim 1, characterised in that insertable elements (9, 10), which engage over the upper edge of the wall elements, are provided for the connection fo adjacent wall elements.

3. A device as claimed in one of claims 1 to 2, characterised in that the base plate can be joined from a plurality of smaller base elements in an interlocking manner.

4. A device as claimed in one of claims 1 to 3, characterised in that there are provided longitudinally adjustable means (12, 13, 14) for the lateral support of the base plate (1) on the walls of the loading compartment.

5. A device as claimed in one of claims 1 to 4, characterised in that the wall elements (8) are provided with means (21-31) for locking to the base plate (1).

6. A device as claimed in claim 5, characterised in that the recesses (7) in the base plate (1) have an undercut (21), and in that a swivel bolt (interlocking means ?) (23, 25), which is engageable in the undercut (21), is connected to a wall element (8).

7. A device as claimed in one of claims 1 to 6, characterised in that the base plate is provided, on its underside, with a slip-proof lining.

## Revendications

1. Dispositif pour le maintien de menus objets ou bagages dans un compartiment à marchandises, en particulier dans le coffre à bagages d'une voiture de tourisme, se composant d'une plaque de fond destinée à être posée sur le fond du compartiment à marchandises et comportant une multiplicité d'évidements ouverts du côté supérieur, et d'au moins un élément de cloison qui peut être fixé dans ces évidements, caractérisé en ce que le bord de l'élément de cloison (8) peut être emboîté dans les évidements (7) de la plaque (1) réalisés sous forme de gouttières dont la largeur correspond à son épaisseur.

2. Dispositif selon la revendication 1, caractérisé en ce qu'il est prévu, pour l'assemblage d'éléments de cloison contigus, des éléments enfichables (9, 10) qui s'adaptent sur le bord supérieur des éléments de cloison.

3. Dispositif selon la revendication 1 ou 2, caractérisé en ce que la plaque de fond peut être composée par emboîtement à partir de plusieurs éléments de fond plus petits.

4. Dispositif selon l'une quelconque des revendications 1 à 3, caractérisé en ce qu'il est prévu des dispositifs réglables en longueur (12, 13, 14) pour soutenir latéralement la plaque de fond (1) en prenant appui sur les parois du compartiment à marchandises.

5. Dispositif selon l'une quelconque des revendications 1 à 4, caractérisé en ce que les éléments de cloison (8) sont équipés de dispositifs (21-31) pour leur verrouillage sur la plaque de fond (1).

6. Dispositif selon la revendication 5, caractérisé en ce que les évidements (7) de la plaque de fond (1) présentent une contre-dépouille (21) et en ce qu'il est raccordé, à un élément de cloison (8), un verrou pivotant (23, 25) qui peut s'enclencher dans cette contre-dépouille (21).

7. Dispositif selon l'une quelconque des revendications 1 à 6, caractérisé en ce que la plaque de fond est garnie, sur sa face inférieure, d'un revêtement anti-glissement.

Fig.1

**Fig.2**

**Fig. 3**

Fig. 4

Fig. 5